Europäisches Patentamt

(19) European Patent Office

Office européen des brevets

(11) Publication number: **0 182 304**
**A2**

(12) # EUROPEAN PATENT APPLICATION

(21) Application number: **85114504.5**

(22) Date of filing: **14.11.85**

(51) Int. Cl.⁴: **B 65 G 53/22**

(30) Priority: **15.11.84 NO 844548**

(43) Date of publication of application: **28.05.86**
**Bulletin 86/22**

(84) Designated Contracting States: **DE GB SE**

(71) Applicant: **Skyllingstad, Olav, Krystallveien 23,**
**N-3900 Porsgrunn (NO)**

(72) Inventor: **Skyllingstad, Olav, Krystallveien 23,**
**N-3900 Porsgrunn (NO)**

(74) Representative: **Patentanwälte TER MEER - MÜLLER -**
**STEINMEISTER, Mauerkircherstrasse 45,**
**D-8000 München 80 (DE)**

(54) **A method and an apparatus for dispensing powdered materials.**

(57) In a method of dispensing powder which when being discharged forms an arch or bridge above the outlet from a gastight container comprising an inner converging part with an outlet opening, wherein gas or air is introduced through openings in the converging part of the container and discharges the powder, air or gas is added discontinuously and in an exactly metered quantity to dispense a certain quantity of powder which is dependant only upon the added quantity of fluidization air or gas. Dispensing is stopped by closing the supply of fluidization air, which is then used to transport pneumatically the powder to a location of use at the same time as the air presses a flap against the outlet from the container and closes it. An apparatus for carrying out the method comprises an upper container (1) and an inner converging part (4) with an outlet (7), said upper part (1) being closed in an airtight manner, preferably by a lid (2), and connected to the converging part (4) which is enclosed in an airtight manner by a part (1') which may be an extension of the part (1), the converging part (4) being equipped with openings (4') for fluidization air or gas which may be added via the part (1') through a closable pipe (10). The converging part (4) is of a material consisting of threads, preferably woven cloth, connected to the part (1) by an attachment arrangement (5) and to an outlet pipe (7) attached to the part (1') and opening into a pipe (9), which accommodates a flap (8) which can shut the opening of the pipe (7), and that the pipe (9) and the pipe (10) are connected to a source of air (12) via a multidirectional adjustable valve (11).

0182304

A method and an apparatus for dispensing powdered
materials
-----------------------------------------------------

The invention concerns a method and an apparatus for
dispensing powder forming a bridge or a funnel above the
outlet when discharged from a container comprising a
lower converging part with a discharge opening.

Powder with poor flow characteristics (small particles,
cohesive) are very difficult to dispense in metered
quantities. If the powder is stored in a container with
sides converging toward a discharge opening in the lower
part, the opening must be above a certain minimum critical
size to prevent a bridge or funnel from being formed above
it. The bridge or arch prevents the powder from flowing
out.

If a smaller opening is desired, discharge aids, mechanical
or pneumatic, must be applied. In conventional dispensers,
the smallest opening is usually positioned at the location
where the powder is transferred from the storage container
to the metering means, which is often a screw or a helix.
This bridge may be broken down mechanically by vibrations,
"stirrers", air cushions, etc. or pneumatically by
fluidization. Fluidization means introducing gas between
the powder particles so that the powder behaves like a
liquid and flows toward the opening. In dispensers where
this method is applied, the fluidization has two purposes:
1. to break down the powder bridge, 2. transfer powder
from the storage container to the metering means. The
actual metering may be carried out by a screw or a helix
of variable speed.

If the powder is to be transported to a location of use
some distance away, transport equipment is needed in
addition to the dispenser.

The inventor was looking for a simple, reliable way of dispensing specific quantities of powder with poor flow characteristics from a container, particularly when these quantities are small. In addition, the powder quantities should permit of transport to a location of use a few metres away.

Having carried out a series of experiments, he found that when the air used for breaking down the powder bridge above the discharge opening is added for a time period accurately set in advance, this air carries with it out of the container a certain quantity of powder, and this quantity is the same when the operation is repeated. Fluidization e.g. for 1 second and with a certain air pressure gives, within certain narrow limits, the same quantity of powder when repeated. The advantage of this is that the transport out of the storage container in itself provides an accurate metering, making additional metering means unnecessary.

A chamber is mounted below the discharge opening, in which the powder collects while the air is added to the container. This chamber is emptied by blowing air from the same source through it after the air supply to the container has been switched off.

Once the chamber has been emptied, the cycle may, if required, be repeated. Thus, there is provided a simple apparatus in which supply of a metered quantity of air to the storage container results in the dispensing of a corresponding quantity of powder, which is then transported to the location of use by air from the same source.

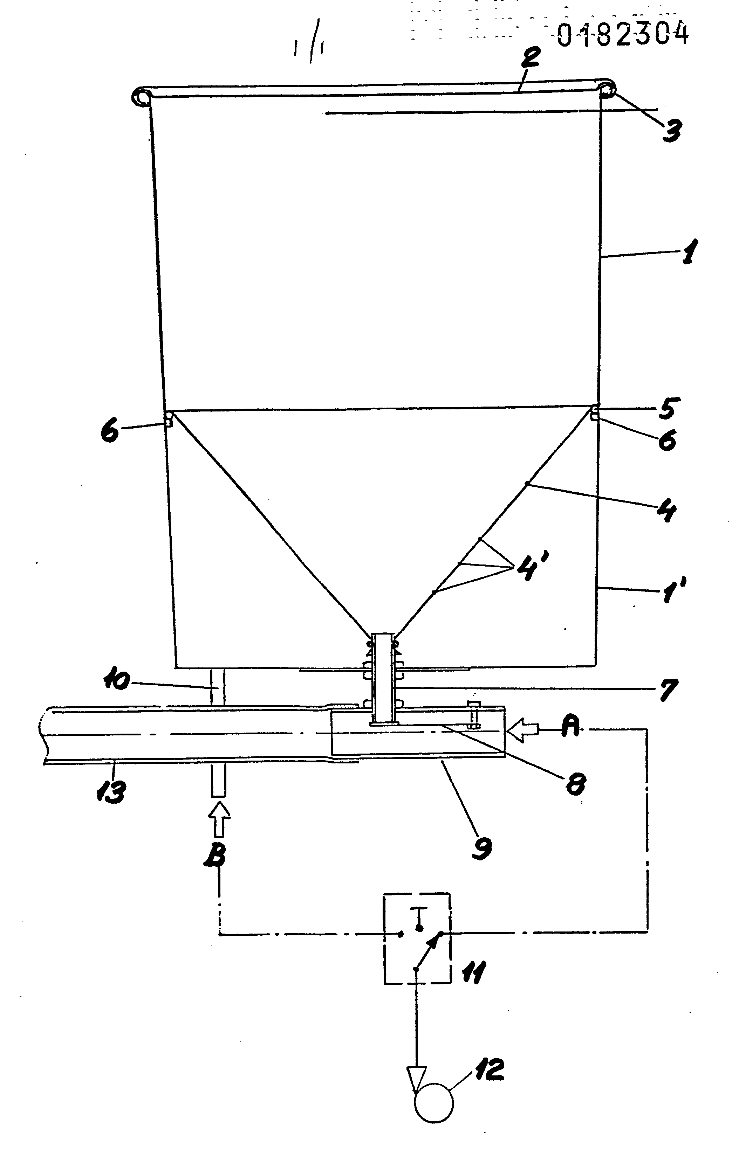

The invention is as defined in the appended patent claims. The invention will be described more fully below with reference to the drawing, in which fig. 1 is a section through a preferred embodiment of an apparatus according to the invention.

The powder container is a metallic, cylindrical, slightly conical container 1 with a lid 2 attached by an attachment ring 3. Typical net content 20 to 100 $dm^3$. A conical textile cloth with high air permeability resistance is attached to a steel ring 5 which rests on supports 6. The outlet from the textile cloth is attached to a steel tube 7 which extends through the bottom of the powder container and radially into a cylindrical powder chamber 9. The textile cloth is stretched by a nut which is pulled tight against the bottom of the powder container. The steel tube 7 is screwed into the powder chamber 9 and secured by a counternut. A soft leaf spring 8 attached to 9 rests against the bottom end of the steel tube 7.

Air may be introduced under the textile cloth through the pipe 10. Air for emptying the powder chamber is blown in at A. The container 1 is filled with powder from the top. The lid 2 is applied and forced airtight against the top of the container by the attachment ring 3. The fan 12 is started, and the air flow is conducted into the powder chamber 9 at A. Any remaining powder is transported through the hose 13 to the location of reception.

After a preset time period, the valve 11 is switched over by means of an electromagnet, and air is introduced under the fluidization cloth through the pipe 10. The air penetrates through the cloth and into the powder which is fluidized. The bridge over the outlet is broken down, and powder flows down into the tube 7 and into the powder chamber 9. The fluidization air has to escape the way. After a short time, e.g. 1 second, the valve is switched back to the original position, optionally via a "rest position". Fluidization of the powder in the container 1 stops very quickly, and the bridge above the opening is formed again. The leaf spring 8 is only necessary for very fine powders which retain the air for a long time.

With the valve 11 in the original position, the air enters at A, and the chamber is blown clean. This sequence is repeated as many times as necessary.

The electric power supply to the fan motor and the electromagnet is controlled by "timers".

A typical application for the apparatus and the method is injection of powdered additives into the combustion chamber of steam/hot water boilers. Here, it is desirable to inject minor quantities (typically 50 to 2000 g) of powder a few times per 24 hours.

The electric power supply to the apparatus is then switched on by means of a timer the desired number of times per 24 hours. Relays incorporated in the apparatus control the duration of the "fluidization interval" and the "clean-blowing interval" as well as the total number of cycles before the fan is switched off.

With the present method and apparatus it is thus possible to combine in a very simple and inexpensive apparatus dispensing of well-defined quantities of bridge-forming powder and transport of these to a location of use. If the same is to be achieved with the commercially available devices, a separate metering step is necessary. In the present invention, the breaking down of the powder bridge and the metering have been combined to a single step.

Patent Claims
---------------------------

1. A method of dispensing powder which when being discharged forms an arch or bridge above the outlet from a gastight container comprising an inner converging part with an outlet opening, wherein gas or air is introduced through openings in the converging part of the container and discharges the powder, c h a r a c t e r i z e d  in that the air or gas is added discontinuously and in an exactly metered quantity to dispense a certain quantity of powder which is dependent only upon the added quantity of fluidization air or gas, and that the dispensing is stopped by closing the supply of fluidization air, which is then used to transport pneumatically the powder to a location of use, at the same time as the air presses a flap against the outlet from the container and closes it.

2. An apparatus for carrying out the method according to claim 1, comprising an upper container (1) and an inner converging part (4) with an outlet (7), said upper part (1) being closed in an airtight manner, preferably by a lid (2), and connected to the converging part (4) which is enclosed in an airtight manner by a part (1'), which may be an extension of the part (1), said converging part (4) being equipped with openings (4') for fluidization air or gas which may be added via the part (1') through a closable pipe (10), c h a r a c t e r i z e d  in that the converging part (4) is of a material consisting of threads, preferably woven cloth, connected to the part (1) by an attachment arrangement (5) and to an outlet pipe (7) attached to the part (1') and opening into a pipe (9), which accommodates a flap (8) which can shut the opening of the pipe (7), and that the pipe (9) and the pipe (10) are connected to a source of air (12) via a multidirectional adjustable valve (11).